# EUROPEAN PATENT APPLICATION

(11) **EP 2 535 163 A1**
(43) Date of publication of application: **19.12.2012**
(21) Application number: 11004911.1
(22) Date of filing: 16.06.2011
(51) Int. Cl.: B29C 45/73

(54) **Method for cooling an object, particularly a tool**

(71) Applicant: Linde Aktiengesellschaft, 80331 Munich (DE); ISK, Iserlohner Kunststoff-Technologie GmbH, 58638 Iserlohn (DE); GWK Gesellschaft Wärme Kältetechnik mbH, 58566 Kierspe (DE)
(72) Inventor: Heninger, Rolf, 85635 Höhenkirchen-Siegertsbrunn (DE); Praller, Andreas, 82110 Germering (DE); Orsén, Mikael, 23136 Trelleborg (SE); Kürten, Andreas, 58644 Iserlohn (DE); Peters, Ingo, 51643 Gummersbach (DE); Glomset, Kennth, 6020 Alesund (NO); Schneeberger, Heribert, 93309 Kelheim (DE)
(74) Representative: Kasseckert, Rainer

(57) **Abstract**

The invention relates to a method for cooling an object, particularly a tool, wherein said object is cooled with carbon dioxide. According to the invention, the carbon dioxide comprises a pressure (p) between 70 bar and 120 bar and a temperature (T) between 20°C and 90°C.

## Description

The invention is related to a method for tempering (cooling) an object, particularly in the form of a tool according to the preamble of claim 1.

According thereto, such a method comprises at least the step of cooling (and eventually also heating) said object with a stream of carbon dioxide.

Methods of the afore-mentioned kind are especially used when producing thermoplastic products in order to cool tools that are used for forming said products. Such molds define a cavity for taking up the thermoplastic material being used for injection molding of said products. The cavity thereby defines the shape (surface) of the final product. The product can be taken out of the mold (cavity) after a cooling period, i.e., once the product has reached a certain temperature. In this respect, the cooling period as well as the quality of the injection molded products depends on the temperature of the mold. Thus, the mold needs proper cooling in order to dissipate the heat of the mold due to the thermoplastic material injected into the mold.

Such a cooling method is described in DE 199 18 428 C1. According thereto, a method for cooling tools (molds) with carbon dioxide is presented, wherein pressurized carbon dioxide is lead via a conduit system into tool regions, in order to cool these regions by a controlled expansion of the carbon dioxide, wherein said tool regions are made of massive (solid) materials.

Further, EP 1970187 A1 discloses a method for tempering a tool, particularly an injection molding tool (mold), wherein said tool is cooled during a cooling period and heated during a heating period, wherein said tool is heated with a gaseous heating medium, particularly carbon dioxide.

However, the expansion of liquid carbon dioxide (CO2) creates a very high cooling effect which is not always desired and necessary.

Further, using expansion, it may be difficult to get a very homogeneous temperature distribution over the mold surface, especially in case molds having a relatively large surface/area are employed.

Finally, using expanding carbon dioxide for cooling, the cooling effect is spatially more confined due to the high cooling effect created by the local expansion of the liquid carbon dioxide, e.g., at the outlet (nozzle) of a used capillary or tube.

Therefore, the problem underlying the present invention is to provide for a method for cooling an object, particularly a tool (mold) that reduces the above-stated disadvantages of the prior art.

This problem is solved by a method for cooling an object having the features of claim 1.

According thereto, the stream of carbon dioxide comprises - upon cooling or upon approaching said object - a pressure between 70 bar and 120 bar as well as a temperature between 20°C and 90°C. Of course, once heat transfer takes place, the state of the carbon dioxide may change locally. However, preferably carbon dioxide is transported to the object continuously, for instance at a constant flow rate, so that the approaching stream preferably comprises a pressure and temperature as stated above. Means may be provided that are configured for maintaining (controlling) the desired state, i.e., temperature and pressure.

In other words, the solution according to the invention particularly prefers cooling with carbon dioxide at a defined pressure and temperature, where the isobaric specific heat capacity cₚ, i.e., the specific heat for constant pressure, is relatively high. Ideally, the carbon dioxide stream is in supercritical state, preferably at approximately 90 bar and 40 °C, where cₚ takes a value of approximately 12,9 kJ/(kg*K).

As a comparison, water has a specific heat of c=4,190 kJ/(kg*K) at 20°C, so that carbon dioxide proves to be a good cooling agent, although a relatively high CO₂-flow rate may be necessary to achieve sufficient cooling under certain circumstances, due to the fact that the cooling effect is much smaller compared to CO₂ expansion cooling, i.e., a high flow rate has to compensate the smaller driving force (temperature difference) needed for efficient cooling.

Further, using carbon dioxide instead of water has the advantages that corrosion and clogging of conduits used to transport the carbon dioxide stream can be avoided.

It is to be noted that carbon dioxide may also be used for heating the object within the framework of the present invention, for instance using gaseous CO₂ having a preferably a temperature between 200°C and 350°C. Thus, the term cooling may also stand for heating in the following. Further, it is conceivable that both cooling and heating occurs during the method according to the invention.

In a preferred embodiment of the invention, the carbon dioxide (stream) employed for cooling said object comprises or is maintained at a temperature between 25°C and 60°C, preferably between 25°C and 50°C, more preferably between 30°C and 50°C, more preferably between 35°C and 50°C, more preferably between 31°C and 50°C, more preferably between 31°C and 45°C, more preferably between 31°C and 40°C, most preferably 40°C. Particularly, these values and all other stated values may vary by an amount (or within the range) of plus minus 10% of the respective value.

In an alternative embodiment of the invention, the carbon dioxide comprises or is maintained at a temperature between 31°C and 90°C, preferably between 40°C and 90°C, more preferably between 60°C and 90°C, most preferably between 60°C and 80°C. Particularly, such temperatures prove to be useful in case the mold surface shall be kept at a higher temperature (for instance 60°C to 80 °C or even higher) and shall not be cooled down deeper.

Further, in a preferred embodiment of the invention, the carbon dioxide comprises or is maintained at a pressure between 70 bar and 115 bar, preferably between 80 bar and 100 bar, more preferably 85 bar and 95 bar, most preferably 90 bar.

Particularly, the stated values/ranges for the pressure and temperature of the used carbon dioxide result in a value of the isobaric specific heat cₚ that is useful for cooling the object while at the same time expansion of the carbon dioxide is not dominant.

Preferably, the carbon dioxide is in a supercritical state, such that the carbon dioxide is able to flow through eventually employed conduits without phase transfer.

It is also conceivable to have the carbon dioxide near or even below the critical point. Above the critical point there is no defined expansion, only a pressure drop due to restrictions defined by conduits taking up the carbon dioxide may occur. It is possible to also have a certain defined expansion of the carbon dioxide, for instance by adjusting the pressure down to 70 bar as an example. The pressure should be not lower than 30 bar, preferably not lower than 50 bar and most preferably not lower than 70 bar. However, particularly, atmospheric pressure is to be avoided.

Most preferably, the used carbon dioxide (stream) comprises a pressure and a temperature being adjusted such that said isobaric specific heat cₚ takes a maximum, particularly its absolute maximum (particularly over the supercritical domain).

In a preferred variant of the invention, the object is a mold designed for injection molding, which typically may comprise two or even more parts that form - when brought together as intended - a cavity defining the surface of the body to be injection molded (for instance some part made out of a thermoplastic resin or another material that can be casted into a mold).

In order to cool said tool or mold, said carbon dioxide is preferably flowing through cooling (tempering) channels (also denoted as conduits) close to the mold cavity surface, thereby indirectly cooling the part to be injection molded. Further, the carbon dioxide may be preferably transported to and/or into the mold via at least one conduit.

Preferably, the carbon dioxide is preferably transported along said object, so that heat transfer takes place from said mold (and the injection molded part within the mold) to the carbon dioxide, which is preferably constantly transported towards the mold and away from the mold in order to transport heat away from the mold.

In order to achieve this, said at least one cooling channel (conduit) is at least in sections encompassed by the mold, wherein particularly said at least one cooling channel extends along and/or around the cavity defined by the mold, which forms the cavity for the used injection molding material. In particular, said at least one cooling channel may branch out in a plurality of cooling channels in order to (evenly) distribute the carbon dioxide around/along the cavity of the mold. Inside the mold, the cooling channels can be formed by holes drilled or eroded into the mold. Such holes may also be formed in an alternative manner, for instance when casting the mold by laser sintering or thermal spraying.

Furthermore, in yet another embodiment of the invention, the carbon dioxide is preferably circulated in a closed cooling circuit in order to cool the mold, wherein heat taken up by the carbon dioxide may be removed a heat exchanger or heat exchanging process in order to re-adjust the temperature of the carbon dioxide to the desired value. Further, a pressurizing means may be provided in the circuit that is configured to pressurize the carbon dioxide stream to the desired pressure (see above) in order to compensate pressure drops/losses, which cannot be avoided or to compensate a small expansion.

Further details and advantages of the present invention shall be explained by means of the following descriptions of Figures of embodiments of the invention with reference to the Figures, wherein
- Fig. 1: shows a phase diagram of carbon dioxide; and
- Fig. 2: shows a system for cooling (heating) a tool (mold) by means of carbon dioxide.

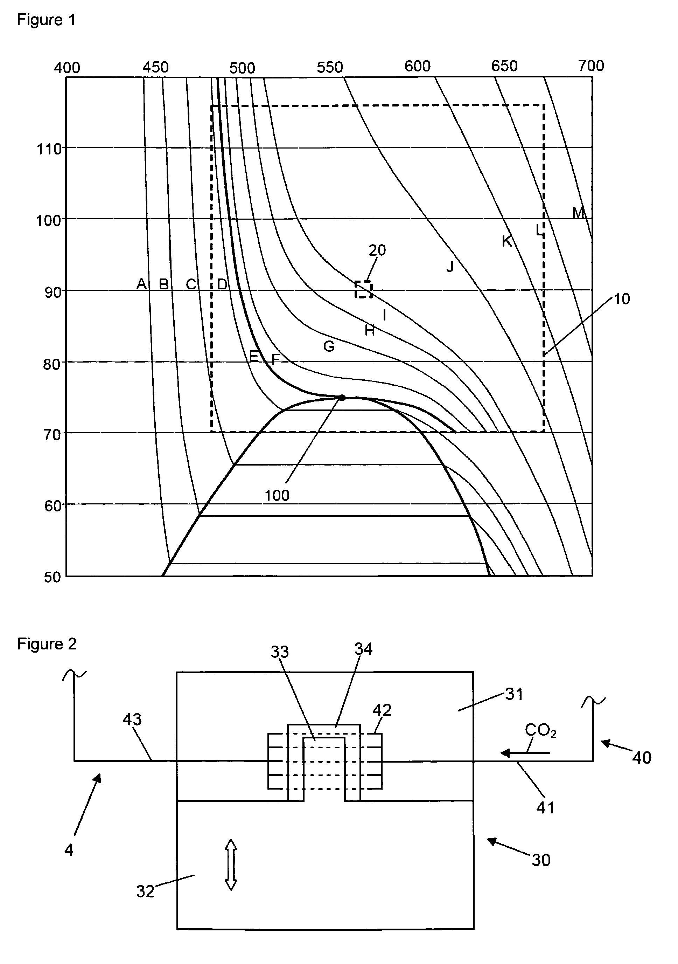

Figure 1 shows a pressure (p) - enthalpy (h) - diagram for carbon dioxide, with the pressure p of the carbon dioxide being stated on the ordinate (50 bar up to 120 bar) and the enthalpy being stated on the abscissa (400 kJ/kg up to 700 kJ/kg).

The lines A-M represent isothermal lines wherein A corresponds to a temperature of the carbon dioxide of T=288.15 K, B corresponds to a temperature of the carbon dioxide of T=293.15 K, C corresponds to a temperature of the carbon dioxide of T=298.15 K, D corresponds to a temperature of the carbon dioxide of T=303.15 K, E corresponds to a temperature of the carbon dioxide of T=304.15 K, F corresponds to a temperature of the carbon dioxide of T=305.65 K, G corresponds to a temperature of the carbon dioxide of T=308.15K, H corresponds to a temperature of the carbon dioxide of T=310.65 K, I corresponds to a temperature of the carbon dioxide of T=313.15 K, J corresponds to a temperature of the carbon dioxide of T=323.15 K,

K corresponds to a temperature of the carbon dioxide of T=333.15 K, L corresponds to a temperature of the carbon dioxide of T=343.15 K, and M corresponds to a temperature of the carbon dioxide of T=353.15 K.

The reference numeral 100 denotes the critical point of CO₂ at which T=304.15 K and p=73.8 bar.

The dashed square 10 indicates a typical range within which the state of the carbon dioxide is situated upon cooling an object according to the invention, particularly in the form of a tool (mold) 30 (cf. Fig. 2) that is employed for injection molding a plastic part for instance.

According to the invention, cooling is performed at a defined pressure and temperature, where the specific heat capacity cₚ is very high - ideally in a supercritical state of the used CO₂, preferably at approximately p=90 bar and T=40 °C where cₚ is approximately 12,9 kJ/(kg*K). This region is indicated as dashed square 20 in Figure 1.

Figure 2 shows - as an example - how cooling with particularly supercritical carbon dioxide may be conducted in a closed cooling circuit (recirculation) 4.

According thereto, the mold 30 comprises a first part 31 forming a recess and a second part 32 having a projecting region 33 protruding into said recess, when the two parts 31, 32 of the mold 30 butt against each other. The two parts 31, 32 of the mold thus delimit a cavity 34 into which a material can be injected in order to form a part defined by the shape of the cavity 34.

In order to cool (or heat) the mold and thus the product (part) residing in its cavity 34, a cooling channel (conduit) 40 of the cooling circuit 4 is provided that has a portion 41 extending within the mold towards the cavity 34 in order to transport the carbon dioxide close to the cavity 34 such that the product in the cavity 34 can be tempered by means of the carbon dioxide (heat transfer). The portion 41 of the cooling channel 40 may branch out in several cooling channels 42 that may extend along or also around said cavity 34 (dashed lines) in order yield the desired heat transfer. In order to further transport the carbon dioxide (and the heat) away from the cavity 34, said cooling channels 42 may be re-united to a single further portion 43 of the cooling channel 40, which may be connected to said portion 41 of the channel 40 in order to build up a cycle. Between portions 41 and 43 of the cooling channel 40, means for heating and/or cooling and for pressurizing the carbon dioxide may be provided, which may interact with suitable sensors that are designed to measure the temperature T and the pressure p of the carbon dioxide residing (circulating) in said conduit 40,

Of course, it is possible to combine cooling and heating with carbon dioxide, which is frequently termed a variothermal process. For heating, gaseous CO₂ is preferably employed having a temperature between 200°C and 350°C in particular.

Finally, the method according to the invention can be applied to all kind of objects and tools, especially also for metal die casting (e.g. aluminium, magnesium, zinc), glass production and so on.

**List of Reference Numerals**

| | |
|---|---|
| 4 | Cooling circuit |
| 10 | Typical range |
| 20 | Typical range |
| 30 | Mold |
| 31 | First part |
| 32 | Second part |
| 33 | Projecting region |
| 34 | Cavity |
| 40 | Conduit |
| 41,43 | Portion |
| 42 | Channels |
| 100 | Critical point |
| A-M | Isothermal lines |

## Claims

1. A method for cooling an object, particularly a tool, wherein said object is cooled with carbon dioxide, **characterized in that** the carbon dioxide comprises a pressure (p) between 70 bar and 120 bar and a temperature (T) between 20°C and 90°C.

2. The method as claimed in claim 1, **characterized in that** the carbon dioxide comprises a temperature (T) between 25°C and 60°C, preferably between 25°C and 50°C, more preferably between 30°C and 50°C, more preferably between 35°C and 50°C, more preferably between 31°C and 50°C, more preferably between 31°C and 45°C, more preferably between 31°C and 40°C, most preferably 40°C.

3. The method as claimed in claim 1, **characterized in that** the carbon dioxide comprises a temperature (T) between 31°C and 90°C, preferably between 40°C and 90°C, more preferably between 60°C and 90°C, most preferably between 60°C and 80°C.

4. The method as claimed in one of the preceding claims, **characterized in that** the carbon dioxide comprises a pressure (p) between 70 bar and 115 bar, preferably between 80 bar and 100 bar, more preferably 85 bar and 95 bar, most preferably 90 bar.

5. The method as claimed in one of the preceding claims, **characterized in that** the carbon dioxide is in a supercritical state.

6. The method as claimed in one of the preceding claims, **characterized in that** the carbon dioxide comprises a pressure (p) and a temperature (T) where the isobaric specific heat cₚ takes a maximum.

7. The method as claimed in one of the preceding claims, **characterized in that** the object (30) is a mold designed for injection molding.

8. The method according to one of the preceding claims, **characterized in that** the carbon dioxide is flowing through at least one cooling channel (40) in the object or along the object (30) in order to cool said object (30), particularly so that heat transfer takes place between said object (30) and said carbon dioxide.

9. The method according to claims 7 and 8, **characterized in that** said at least one cooling channel (40) is at least in sections surrounded by said mold (30), wherein particularly said at least one cooling channel (40) extends along and/or around a cavity (34) defined by the mold (30).

10. The method according to one of the preceding claims, **characterized in that** the carbon dioxide is circulated in a cooling circuit (4).

11. The method according to one of the preceding claims **characterized in that** the object is also heated with gaseous carbon dioxide, preferably having a temperature between 200°C and 350°C.
